# EUROPEAN PATENT APPLICATION

(11) **EP 2 047 941 A1**
(43) Date of publication of application: **15.04.2009**
(21) Application number: 07019945.0
(22) Date of filing: 11.10.2007
(51) Int. Cl.: B23K 31/12, B23K 37/08, B21B 15/00, B23C 3/12, B23C 3/13, B23D 79/02, B24B 9/04, F03D 11/04, B21C 37/08, B23K 9/025, B23K 9/028

(54) **Method for the strengthening of a welded connexion, and/or for the increase of tolerance of a welded connexion in relation to fatigue load ; Element for a tower of a wind turbine ; Tower of a wind turbine and wind turbine**

(71) Applicant: SIEMENS AKTIENGESELLSCHAFT, 80333 München (DE)
(72) Inventor: Halken, Troels, 7400 Herning (DE); Pedersen, Björn, 6823 Ansager (DK); Steensgaard, Nicolai Hallum, 7183 Randboel (DK)

(57) **Abstract**

The invention concerns a method of strengthening a welded connexion comprising at least one weld seam (2,3) and/or of increasing of tolerance of a welded connexion in relation to fatigue load which welded connexion joins at least two sections of one component or at least one section (4) of a first component (6) and at least one section (5) of a second component (7) with each other, wherein the geometry of the at least one weld seam (2,3) and of at least one section (4,5) of at least one component (6,7), which at least one section (4,5) adjoins to the at least one weld seam (2, 3), is specifically modified by removing welding material (8) from the at least one weld seam (2,3) and by removing material of the at least one section (4,5) of the at least one component (6,7), which material adjoins to the at least one weld seam (2,3) . The invention relates also to an element for a tower of a wind turbine, to a tower of a wind turbine and to a wind turbine having at least one welded connexion with this modified geometry.

## Description

Method for the strengthening of a welded connexion and/or for the increase of tolerance of a welded connexion in relation to fatigue load, element for a tower of a wind turbine, tower of a wind turbine and wind turbine

The invention relates to a method for the strengthening of a welded connexion comprising a weld seam and/or for the increase of tolerance of a welded connexion in relation to fatigue load. The invention concerns also an element for a tower of a wind turbine, a tower of a wind turbine as well as a wind turbine.

A tower of a wind turbine typically comprises a plurality of hollow cylindrical elements welded together and building a segment of the tower with flanges on both ends. Several of these segments are bolted together for building the tower. Each of these cylindrical elements is manufactured based on a plate made of steel. Each plate made of steel is cut to the required length and width. Afterwards the plate is rolled to form a hollow cylindrical element with a slit between the two ends of the rolled plate. Finally the two ends are welded together to close the hollow cylindrical element. Several of theses hollow cylindrical elements are then welded together to build the mentioned segment of the tower of the wind turbine. As a rule the hollow cylindrical elements are welded on the inside as well as on the outside. Thus each welded connexion comprises a weld seam on the inside and a weld seam on the outside. Typically there are substantially vertically running welded connexions or weld seams, wherein each vertically running welded connexion or weld seam closes a hollow cylindrical element, and substantially horizontally running welded connexions or weld seams, wherein each horizontally running welded connexion or weld seam joins two hollow cylindrical elements.

In principle a tower of a wind turbine is dimensioned according to two factors. The one factor is the strength the tower must have and the other factor is the fatigue load the tower must tolerate. The higher of these two factors will be the relevant factor for the dimensioning of the different parts of the tower.

In this context also the welded connexions and in particular the weld seams of and between the hollow cylindrical elements are relevant. As a rule the weld seams are less tolerant to fatigue load and/or to stress load than the plates of the hollow cylindrical elements. Thereby when the tower of the wind turbine is standing upright the horizontally running weld seams are subjected to the highest loads. Thus as the weld seams are the weakest link in the chain, they are relevant for the dimensioning. In particular the fatigue load of the weld seams is often the relevant factor for the dimensioning of the tower. Therefore the plates of the hollow cylindrical elements are mostly dimensioned according to the weaker weld seams. Hence the plates are thicker then they normally need to be to accommodate stronger weld seams. The thickest plates which are currently used have a thickness of about 70 mm - 80 mm. Thereby 80 mm is a kind of limit since rollers which can handle thicker plates are not widespread among the manufacturers of hollow cylindrical elements for a tower of a wind turbine. In addition more steel is needed to manufacture the hollow cylindrical elements and thus the tower.

A stronger tower of a wind turbine with an unchanged thickness of the plates or thicker plates of the hollow cylindrical elements can also be achieved by increasing the diameter of the hollow cylindrical elements and thus of the tower. However the upper limit of the diameter is usual approximately 4.5 m because the tower has to be transported e.g. on road. With thicker plates the strength of the tower is able to be increased once more.

It is therefore an object of the present invention to provide a method as initially mentioned in such a way, that the strength of a welded connexion is able to be increased and/or that the tolerance of a welded connexion in relation to fatigue load is able to be increased. It is a further object of the present invention to indicate a respective element for a tower of a wind turbine, a respective tower of a wind turbine as well as a respective wind turbine.

The first object is inventively achieved by a method for the strengthening of a welded connexion comprising at least one weld seam and/or for the increase of tolerance of a welded connexion in relation to fatigue load which welded connexion joins at least two sections of one component or at least one section of a first component and at least one section of a second component with each other, wherein the geometry, the form or the shape of the at least one weld seam and of at least one section of at least one component, which at least one section adjoins to the at least one weld seam, is specifically modified in a defined way by removing welding material from the at least one weld seam and by removing material of the at least one section of the at least one component, which material adjoins to the at least one weld seam. The inventors have recognized that the higher sensitivity of a welded connexion in particular of a weld seam particularly to fatigue load is based on the notch effect of the weld seam. Because of the notch effect cracks induced by fatigue appear in the fusion zone or the line of fusion between a component or the section of a component and the welding material of the weld seam usually close to the surface. These cracks can lead under a static or dynamic load to a failure of the weld seam. The inventors have furthermore recognized that the strength of a welded connexion and particularly of a weld seam and/or the tolerance of a welded connexion and particularly of a weld seam in relation to fatigue load is able to be increased when the geometry of the welded connexion is modified. Thereby the welded connexion and the weld seam respectively is generated as usual wherein two sections of a component e.g. of a hollow cylindrical element of a tower of a wind turbine or two sections of two or more components e.g. of two hollow cylindrical elements of a tower of a wind turbine are welded together. Afterwards the geometry of the generated weld seam and additionally of at least one section of at least one component, which at least one section adjoins to the at least one weld seam, is specifically modified in a defined way by removing a specific part and/or a specific or small amount of welding material of the weld seam and material of the at least one section of the at least one component starting from the outer surface of the weld seam.

Typically the geometry of the welded connexion and thus of the weld seam and the at least one section of the at least one component is modified along the welded connexion or the weld seam preferably along the whole welded connexion or weld seam in substantially the same way. According to this the cross-section along a welded connexion or a weld seam is substantially the same. Thereby the welded connexion is not really weakened but modified in view of its geometry. Such a modified welded connexion and weld seam respectively is able to withstand loads in particular fatigue loads better than an unmodified welded connexion or weld seam. Thus by modifying the geometry of a welded connexion the strength of a whole welded connexion comprising a weld seam is able to be increased.

In a variant of the invention the at least one weld seam comprising welding material adjoins in each case to a connexion region of a section of a component which connexion region is at least partially loaded with heat during the welding procedure.

According to a further variant of the invention welding material of the at least one weld seam and material adjoining to the at least one weld seam of the at least one section of the at least one component in the connexion region of the at least one component are removed. Alternatively welding material of the at least one weld seam and material adjoining to the at least one weld seam of the at least one section of the at least one component in and outside of the connexion region of the at least one component are removed.

In an embodiment of the invention the removal of material is preferably a small channeling of the at least one weld seam and of the at least one section of the at least one component which section adjoins to the at least one weld seam. Typically the weld seam and the both sections of the one or the two components which sections adjoin to the weld seam comprise the manufactured channel.

According to a variant of the invention the channel is U-shaped, V-shaped and/or fluting-shaped. In an embodiment of the invention the channel comprises a depth between 0.2 mm and 5 mm, preferably between 0.5 mm and 2 mm, and/or a width between 2 mm and 40 mm or more than 40 mm, preferably between 10 mm and 20 mm, and/or an arc length between 2 mm and 45 mm or more than 45 mm, preferably between 10 mm and 25 mm.

According to another embodiment of the invention the welded connexion comprises an I-butt joint, a V-butt joint, an X-butt joint or a fillet weld.

According to further variants of the invention the channel is manufactured by hand or automatically. The channel is able to be manufactured by milling and/or by grinding using a milling and/or a grinding machine. Preferably the channel is manufactured by milling.

The further object of the invention is achieved by an element for a tower of a wind turbine containing a welded connexion comprising at least one weld seam which welded connexion joins two sections of the element with each other, wherein the welded connexion is modified according to a before mentioned method. Thus the geometry of the normally vertically running welded connexion is specifically modified in a defined way by removing welding material from the at least one weld seam and by removing material of at least one section of at least one component, which material adjoins to the at least one weld seam.

Preferably the element is manufactured cylinder tube like based on a plate having two end sections welded together.

The further object of the invention is also achieved by a tower of a wind turbine comprising at least two hollow cylindrical or cylinder tube like elements which are joined with each other by at least one substantially horizontally running welded connexion comprising at least one weld seam, wherein the welded connexion is modified according to a before mentioned method.

The invention will in the following be explained in more detail with reference to the schematic drawings, wherein
- FIG 1: shows a conventional welded connexion,
- FIG 2, 3: show welded connexions according to the invention,
- FIG 4: shows the results of fatigue tests of different welded connexions,
- FIG 5: shows an element for a tower of a wind turbine,
- FIG 6: shows two elements according to FIG 5 welded together, and
- FIG 7: shows a wind turbine.

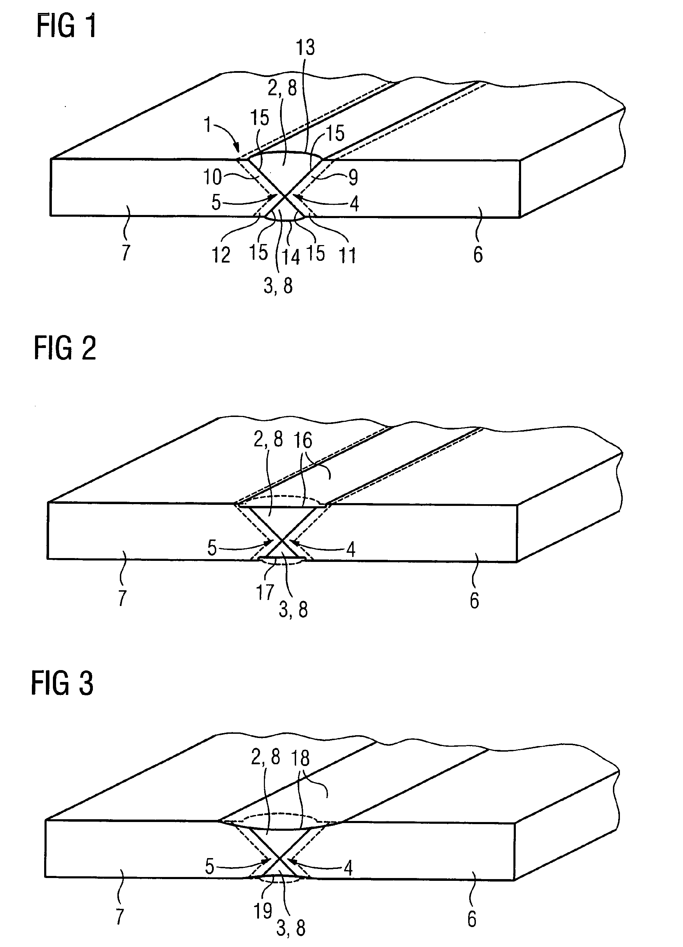

FIG 1 shows schematically a conventional welded connexion comprising an X-butt joint 1. The X-butt joint 1 contains two weld seams 2, 3 in form of a first V-butt joint 2 and a second V-butt joint 3 arranged oppositely to each other. The welded connexion joins a section 4 of a first component 6 in form of a plate 6 made of steel and a section 5 of a second component 7 in form of a plate 7 made of steel.

The first weld seam 2 comprising welding material 8 adjoins to a first connexion region 9 of the section 4 of the first plate 6 and to a first connexion region 10 of the section 5 of the second plate 7. The second weld seam 3 comprising welding material 8 adjoins to a second connexion region 11 of the section 4 of the first plate 6 and to a second connexion region 12 of the section 5 of the second plate 7. The connexion regions 9 - 12 marked by dashed lines are these regions of the sections 4, 5 of the first and the second plate 6, 7 which are at least partially loaded and/or affected by heat during the welding procedure.

The first weld seam 2 and the second weld seam 3 comprise after the welding procedure a slightly convex part 13, 14 of welding material 8. This is the normal structure of a weld seam. Such a weld seam has a relatively high sensitivity to fatigue load in particular because of the notch effect. In this context fatigue induced cracks can appear in the fusion zones 15 or the lines of fusion 15 between the sections 4, 5 of the plates 6, 7 and the welding material 8 of the weld seams 2, 3. These cracks can lead under a static or dynamic load to a failure of the weld seams 2, 3.

Therefore according to the invention the geometry, the form or the shape of the welded connexion is modified. In case of the present embodiment shown in FIG 2 the geometry of the first weld seam 2 and the geometry of the second weld seam 3 are specifically modified by removing welding material 8 from each weld seam 2, 3. Additionally the geometries of the sections 4, 5 of the two plates 6, 7, which sections 4, 5 adjoin to the first and the second weld seam 2, 3 are specifically modified by removing material of the sections 4, 5 of the plates 6, 7 in the connexion regions 9, 10 and 11, 12 of the plates 6, 7 which material of the plates 6, 7 adjoins to the first weld seam 2 and the second weld seam 3 respectively.

In case of the present embodiment of the invention the removal of welding material 8 and of material of the plates 6, 7 is a channeling of the first and the second weld seam 2, 3 and partially of the sections 4, 5 of the plates 6, 7. The channeling can be done by hand or automatically. Manually grinding off welding material and material of the plates however is a hard and labour-intensive work with the risk that the quality can vary. Therefore preferably a milling and/or a grinding machine is used for the channeling. In case of the present embodiment the manufactured channels are U-shaped channels 16, 17. By modifying the geometries of the weld seams 2, 3 and the sections 4, 5 of the plates 6, 7 in the described matter the strength of the welded connexion can be increased.

FIG 3 shows the weld seams 2, 3 and the sections 4, 5 with alternative channels. In case of this embodiment of the invention the channels are fluting-shaped channels 18, 19. By the manufacturing of the fluting-shaped channels 18, 19 welding material 8 of the first and the second weld seam 2, 3 as well as material of the sections 4, 5 of the plates 6, 7 in and outside of the connexion regions 9 - 12 of the plates 6, 7 were removed.

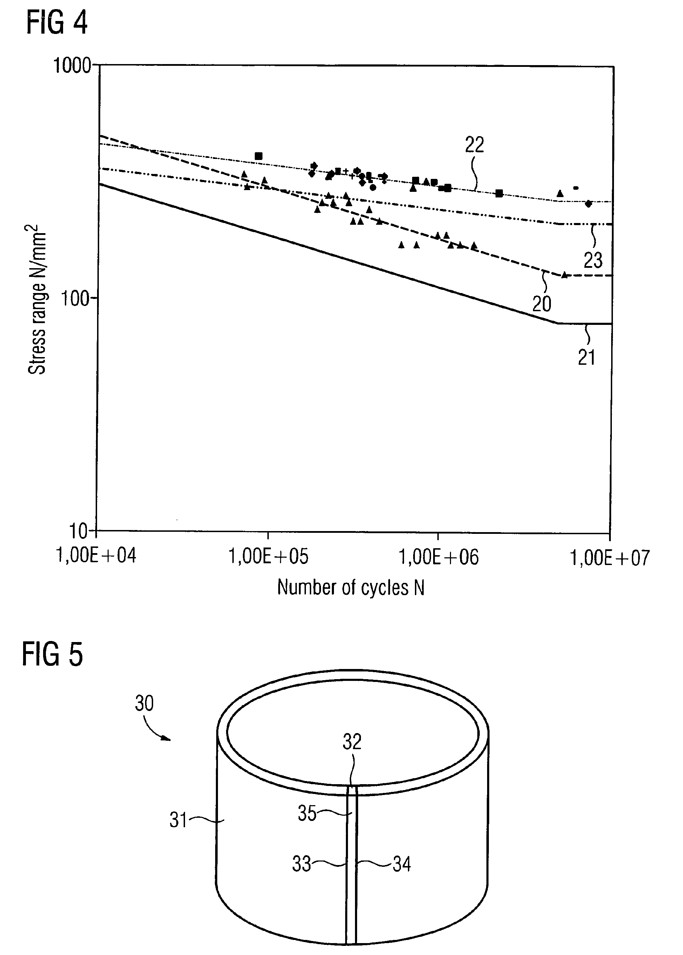

FIG 4 shows schematically the results of fatigue tests with a plurality of pairs of plates welded together that comprised different welded connexions. On the x-axis the number of load cycles is plotted in a logarithmic scale and on the y-axis the stress range is plotted in a logarithmic scale. Fatigue tests were made with pairs of plates which had a welded connexion as shown in FIG 1, thus with an unmodified geometry of the welded connexion. The single test results are represented by the small triangles in FIG 4. The average behaviour of welded plates with this type of a welded connexion is represented by the curve 20 in FIG 4. The curve 21 shows the course of the corresponding standard deviation. Further fatigue tests were made with pairs of plates which had a welded connexion as shown in FIG 2 or FIG 3 or which had a welded connexion with another geometry of the manufactured channels. The depth of the channels respectively measured from the surface of a plate varied between 0.5 mm and 2 mm, and the width of the channels varied between 10 mm and 20 mm and the arc length of the channels varied between 10 mm and 20 mm respectively. There were tested different combinations of depth and width and arc length respectively. The single test results are represented by the small squares, lozenges, circles, plus, minus etc. in FIG 4 wherein every type of a small sign represents another combination of depth and width or arc length of a channel. The average behaviour of welded plates with these types of welded connexions with modified geometry is represented by the curve 22 in FIG 4. As can be seen by means of FIG 4 the curve 22 lies significantly higher than the curve 20 what means that welded connexions with modified geometry withstand fatigue load significantly better than welded connexions with an unmodified geometry. The curve 23 shows the course of the respective standard deviation.

It was additionally found out that practically all of the different combinations of depth and width or depth and arc length or depth and radius for a channel showed substantially the same result that a welded connexion with a modified geometry has an increased resistance against fatigue load. Whilst the pairs of welded plates which had a conventional welded connexion nearly always fractured in the fusion zones or lines of fusion, the pairs of welded plates which had a welded connexion with modified geometry showed more dispersed fractures. Even some of the fractures occurred in the plates outside the zones affected by welding. This indicates that a welded connexion can be as tolerant to stress as a plate after modifying the geometry of the welded connexion.

Furthermore as can be seen by means of the distribution of the single test results in relation to the curve 20 and the curve 22 respectively in FIG 4 there is less variation in the behaviour of the welded plates which had a welded connexion with a modified geometry (cp. curves 21 and 23). This is probably due to small variations in the geometry of the fusion zones or the lines of fusion of the conventional welded connexions. Modifying the geometry of a welded connexion by a grinding and/or milling process makes the geometry of the welded connexion more consistent, hence it fails with less variation.

FIG 5 shows schematically an element 30 for a tower of a wind turbine. A plate 31 of a certain length and a certain width was rolled and formed to the cylinder tube like element 30 of FIG 5. The remaining slit 32 after rolling and forming of the plate 31 between the two end sections 33, 34 of the element 30 is closed by an X-butt joint 35. The X-butt joint 35 conforms to the X-butt joint shown in FIG 2 thus the substantially vertically running welded connexion with a weld seam on the inside and a weld seam on the outside of the element comprises a modified geometry manufactured by milling and/or grinding. In this way a plurality of elements 30 can be manufactured to assemble at least a part or a segment of a tower of a wind turbine.

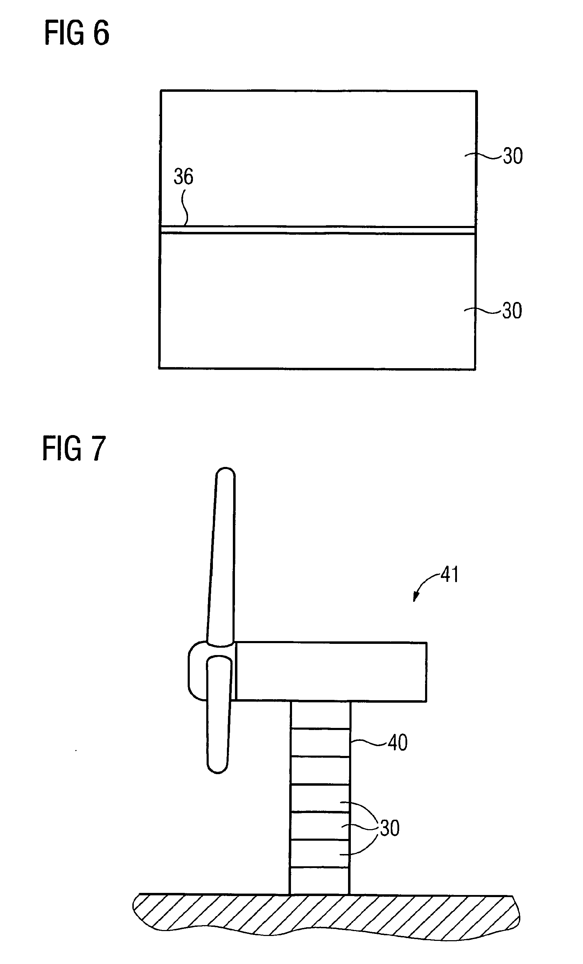

FIG 6 shows two elements 30 according to FIG 5 welded together for the assembly of at least a segment of a tower of a wind turbine. Thereby the two elements 30 were stacked one upon the other and were welded together inside and outside by means of an X-butt joint 36. The X-butt joint 36 conforms to the X-butt joint 35 and the X-butt joint shown in FIG 2 thus the substantially horizontally running welded connexion with a weld seam on the inside and with a weld seam on the outside of the segment of the tower comprises a modified geometry manufactured by milling and/or grinding.

In this way at least a segment of a tower 40 of a wind turbine 41 as shown in FIG 7 can be assembled.

The use of the inventive method for the strengthening of welded connexions in particular for the strengthening of the welded connexions of the elements of the tower enables on the one hand to reduce the thickness of the plates for forming and producing the elements and hence to save material that reduces the costs. According to a first rough investigation of this detail a reduction of material between 13 % and 20 % seems to be possible. As a tower has typically an inertia in excess of 200 tons a reduction of 5 % of the material means a reduction in material costs of 10.000 € with 1€/kg steel.

On the other hand larger towers can be assembled. The smaller deviation in relation of the fracture behaviour means that towers with narrower margin can be designed.

Furthermore the invention can lead to a prolongation of the lifetime of towers made of steel.

Preceding welded connexions are described comprising an X-butt joint. But the invention also concerns welded connexions comprising an I-butt joint, a V-butt joint or a fillet weld.

## Claims

1. Method for the strengthening of a welded connexion comprising at least one weld seam (2, 3) and/or for the increase of tolerance of a welded connexion in relation to fatigue load which welded connexion joins at least two sections (33, 34) of one component (30) or at least one section (4) of a first component (6) and at least one section (5) of a second component (7) with each other, wherein the geometry of the at least one weld seam (2, 3) and of at least one section (4, 5) of at least one component (6, 7, 30), which at least one section (4, 5) adjoins to the at least one weld seam (2, 3), is specifically modified by removing welding material (8) from the at least one weld seam (2, 3) and by removing material of the at least one section (4, 5) of the at least one component (6, 7, 30), which material adjoins to the at least one weld seam (2, 3).

2. Method according to claim 1, wherein the at least one weld seam (2, 3) comprising welding material (8) adjoins in each case to a connexion region (9 - 12) of a section (4, 5) of a component (6, 7, 30) which connexion region (9 - 12) is at least partially loaded with heat during the welding procedure.

3. Method according to claim 2, wherein welding material (8) of the at least one weld seam (2, 3) and material adjoining to the at least one weld seam (2, 3) of the at least one section (4, 5) of the at least one component (6, 7, 30) in the connexion region (9 - 12) of the at least one component (6, 7, 30) are removed.

4. Method according to claim 2 or 3, wherein welding material (8) of the at least one weld seam (2, 3) and material adjoining to the at least one weld seam (2, 3) of the at least one section (4, 5) of the at least one component (6, 7, 30) in and outside of the connexion region (9 - 12) of the at least one component (6, 7, 30) are removed.

5. Method according to any one of the claims 1 to 4, wherein the removal of material is a channeling (16 - 19) of the at least one weld seam (2, 3) and the at least one section (4, 5) of the at least one component (6, 7, 30), which section (4, 5) adjoins to the at least one weld seam (2, 3).

6. Method according to claim 5, wherein the channel is U-shaped (16, 17), V-shaped and/or fluting-shaped (18, 19).

7. Method according to claim 5 or 6, wherein the channel comprises a depth between 0.2 mm and 5 mm and/or a width between 2 mm and 40 mm and/or an arc length between 2 and 45 mm.

8. Method according to any one of the claims 1 to 7, wherein the welded connexion comprises an I butt joint, a V butt joint, an X-butt joint (1) or a fillet weld.

9. Method according to any one of the claims 5 to 8, wherein the channel (16 - 19) is manufactured by hand or automatically.

10. Method according to any one of the claims 5 to 9, wherein the channel (16 - 19) is manufactured by milling and/or by grinding.

11. Element for a tower of a wind turbine containing a welded connexion comprising at least one weld seam which welded connexion joins two sections (33, 34) of the element (30) with each other, wherein the welded connexion is modified according to a method of the claims 1 to 10.

12. Element according to claim 11, which is manufactured cylinder tube like based on a plate (31) having two end sections (33, 34) welded together.

13. Tower of a wind turbine comprising at least two elements (30) which are joined with each other by at least one substantially horizontally running welded connexion comprising at least one weld seam, wherein the welded connexion is modified according to a method of the claims 1 to 10.

14. Wind turbine comprising a tower according to claim 13.
